# EUROPEAN PATENT SPECIFICATION

(11) **EP 2 471 247 B1**
(45) Date of publication and mention of the grant of the patent: **15.10.2014**
(21) Application number: 10751715.3
(22) Date of filing: 30.07.2010
(51) Int. Cl.: H04L 29/12, H04L 29/06, H04W 8/08, H04W 80/04

(54) **Method and network nodes for generating cryptographically generated addresses in mobile IP networks**
Verfahren und Netzwerkknoten zur Erzeugung von kryptografisch generierten Adressen in mobilen IP-Netzen
Procédé et noeuds de réseau pour génération d'adresses générées de manière cryptographique dans des réseaux IP mobiles

(30) Priority: 27.08.2009 US 549130
(43) Date of publication of application: 04.07.2012
(73) Proprietor: Telefonaktiebolaget LM Ericsson (publ), 164 83 Stockholm (SE)
(72) Inventor: OULAI, Desire, Longueuil Québec J4M 2Z3 (CA)
(74) Representative: HOFFMANN EITLE
(86) International application number: PCT/IB2010/053487
(87) International publication number: WO 2011/024090

(56) References cited:
- WO-A1-2005/104499
- WO-A1-2009/003379
- KRISHNAN ERICSSON J LAGANIER DOCOMO EURO-LABS M BONOLA ROME TOR VERGATA UNIVERSITY S: "Secure Proxy ND Support for SEND; draft-ietf-csi-proxy-send-01.txt" SECURE PROXY ND SUPPORT FOR SEND; DRAFT-IETF-CSI-PROXY-SEND-01.TXT, INTERNET ENGINEERING TASK FORCE, IETF; STANDARDWORKINGDRAFT, INTERNET SOCIETY (ISOC) 4, RUE DES FALAISES CH- 1205 GENEVA, SWITZERLAND, vol. csi, no. 1, 13 July 2009 (2009-07-13) , XP015063599 [retrieved on 2009-07-15]
- REN K ET AL: "Routing optimization security in mobile IPv6" COMPUTER NETWORKS, ELSEVIER SCIENCE PUBLISHERS B.V., AMSTERDAM, NL LNKD- DOI:10.1016/J.COMNET.2005.09.019, vol. 50, no. 13, 15 September 2006 (2006-09-15), pages 2401-2419, XP025182803 ISSN: 1389-1286 [retrieved on 2006-09-15]

## Description

### FIELD

The present invention generally relates to mobile IP networks. More specifically, the present invention is concerned with a method and network nodes for cryptographically generating addresses in mobile IP networks.

### BACKGROUND

Over the past few decades, telecommunications and Internet have experienced an incredible growth and expansion. Technologies have changed from centralized computing to personalized computing and now to mobile computing with a convergence of networks, devices and services.

Mobile computing is made possible through the use of Mobile IP or more specifically Mobile IPv6 (MIPv6), using the version 6 of Internet Protocol (IP). MIPv6 is an Internet Engineering Task Force (IETF) standard communication protocol. It has been designed to allow mobile users to move from one network to another without experiencing discontinuity of services. Indeed, MIPv6 protocol provides continuous IP services to a mobile node (MN), the mobile node being a mobile phone, a laptop or PDA, etc., by maintaining connectivity of the MN with different networks.

The mobility services are deployed through a Home Agent (HA) which provides a Home Address (HoA) to a MN registered with that HA. When the MN moves away and attaches itself to a different access router, it acquires a new address, called the Care-Of Address (CoA). The MN then sends a Binding Update (BU) to the HA in order to bind the CoA to the HoA, so that traffic directed to the HoA is forwarded to the CoA. The HA replies back to the MN with a Binding Acknowledgement (BA) and forwards each packet with HoA as destination address to the CoA using a bidirectional tunnel, for example. By so doing, the mobile node (MN) is able to move without ending ongoing sessions as the HoA of the MN remains unchanged.

Furthermore, MIPv6 defines a Route Optimization (RO) process where the MN can send directly a Binding Update (BU) to a corresponding node (CN) in order to use a direct path. Before sending the direct BU, the MN has to perform a Return Routability (RR) test in order to give to the CN a certain level of guarantee that it can be reached at the Home Address (HoA) and the new Care-Of Address (CoA). To perform RR, the MN sends a Home Test Init (HoTI) message to the CN through the HA. The source address of the HoTI is the HoA. Simultaneously, the MN sends directly a CareOf Test Init (CoTI) message to the CN with CoA as the source address. The CN replies to these two messages by including a Home Token in the HoT message and a CareOf token in the Cost message. If the MN receives those two messages, that means it is reachable via HoA 5 and CoA. In this case, the probability to have a malicious MN is low. Then the MN combines both tokens, i.e. the Care Of Token and the Home Token, to get a binding management key (Kbm) used to send the BU to the CN. Upon receipt of the BU, the CN will then be able to assess that the Kbm was formed using both tokens.

A MN Proxy solution has been recently defined in order to add network support to 10 MIPv6. The MN Proxy is generally located in the access router and performs the signaling on behalf of the MN. It reduces signaling and tunnelling overhead over the radio interface between the MN and the network. A major advantage of the MN Proxy solution is that some extensions may be defined without any MN involvement, i.e. the network takes care of the extensions. Route optimization is one of such extensions.

Cryptographically generated addresses (CGAs) allow for proving that the sender of a data packet is actually the owner of the address (proof of ownership). In order to generate a CGA, a node has a pair of asymmetrical keys, including a public key and a private key, the public key being shared with other nodes, such as a destination node, for example. CGA was developed for increasing security and at the same time reducing traffic exchange between different nodes. The host ID part of the CGA is cryptographically generated using the address owner's private key and some parameters specific to the interface. To verify the address in a destination node, the sender should send to the destination node the CGA parameters, its public key and sign the data packet using its private key. Then, the destination node can obtain the proof of ownership by recalculating or validating the CGA with the received parameters and the public key.

A solution for RO using CGA has been defined. It uses a permanent Home token based on a CGA of the HoA. The MN needs to perform the Home reachability test once. After a handover, the MN sends an early BU (EBU) to the CN. The EBU contains the Home Token and the material for the CGA verification.

Background art of interest is disclosed in WO 2009/003379 A1, specifically a configuration method of a cryptographically generated address (CGA). The configuration method is used to enable a generated CGA to satisfy requirements of a network configuration, and includes the following steps. A Dynamic Host Configuration Protocol (DHCP) server receives a client configuration information sent from a client. The DHCP server generates a CGA according to the client configuration and the network configuration from the DHCP server. The DHCP server delivers the CGA to the client. The network configuration is made as a reference when the CGA is generated, which overcomes a disadvantage that the CGA generated by the client cannot satisfy the requirements of the network configuration in the prior art. Thus, the generation of CGA can be intervened at a network management level, and a management capability of the network is improved.

Document XP15063599 (Source Proxy ND Support for SEND, draft-ietf-csi-proxy-send-01) discloses a scenario similar to the one disclosed in the application.

However, the existing solutions bring scalability problems and put pressure on the end-user devices. Therefore, there is a need for improved solutions using and generating CGAs.

### SUMMARY

More specifically, in accordance with the present invention, there is provided a network node as set in appended claim 1, and a method for generating a cryptographically generated address (CGA) as set out in claim 10. Optional features are set out in the remaining claims.

The foregoing and other objects, advantages and features of the present invention will become more apparent upon reading of the following non-restrictive description of illustrative embodiments thereof, given by way of example only with reference to the accompanying drawings.

### BRIEF DESCRIPTION OF THE DRAWINGS

In the appended drawings:
Figure 1 is a schematic view of a MIP network according to a non-restrictive illustrative embodiment of the present invention;
Figure 2 is a schematic view of a network node for generating a CGA for another node, according to a non-restrictive illustrative embodiment of the present invention;
Figure 3 is a schematic view of a second network node according to a non-restrictive illustrative embodiment of the present invention;
Figure 4 is a schematic view of a third network node according to a non-restrictive illustrative embodiment of the present invention;
Figure 5 is a flow chart illustrating a method for generating a CGA according to a non-restrictive illustrative embodiment of the present invention;
Figure 6 is a schematic view of a header of a HoTI message according to an embodiment of the present invention; and
Figure 7 is a flow chart illustrating a method of routing optimization using the method of Figure 5, in the MIP network of Figure 1.

### DETAILED DESCRIPTION

Generally stated, non-restrictive illustrative embodiments of the present invention provide for a network node, located in the communication path between a first node and a second node, which generates a CGA for another node, such as the first node. Thus, the embodiments of the present invention allow for separating the node generating the CGA from the node for which the CGA is generated. By so doing, one single node may generate a plurality of CGAs for many different nodes. In order to distinguish each generated CGA for each different node, the generation of each CGA takes into account unique information of each different node.

A very interesting application of the above-mentioned generation of CGAs can be found in the route optimization in MIPv6 using the MN Proxy solution. To do so, the HA, which is located on the communication path between a MN and a CN, gets involved in the routing optimization by generating a CGA as the home address for the MN or MN Proxy. Since scalability problems are observed when each MN has CGA capabilities, when the CGA of the home address of the MN is generated by the HA with its own private key, scalability problems are overcome. During the initial route optimization, for the home reachability test, the MN proxy, on behalf of the MN, sends a HoTI message to the HA. When the HA receives the HoTI message, it replaces the received HoTI message with a signed HoTI message, signed with its own private key. Then, the HA sends the signed HoTI message to the CN, along with the other CGA parameters, which CGA parameters are well-known in the art, and its public key. When the CN receives all this information, it can, as required, obtain the proof of ownership of the CGA, i.e. it is able to know that whoever signed the received message is the owner of the CGA generated for the MN. This new method for route optimization will be described in more detail hereinbelow.

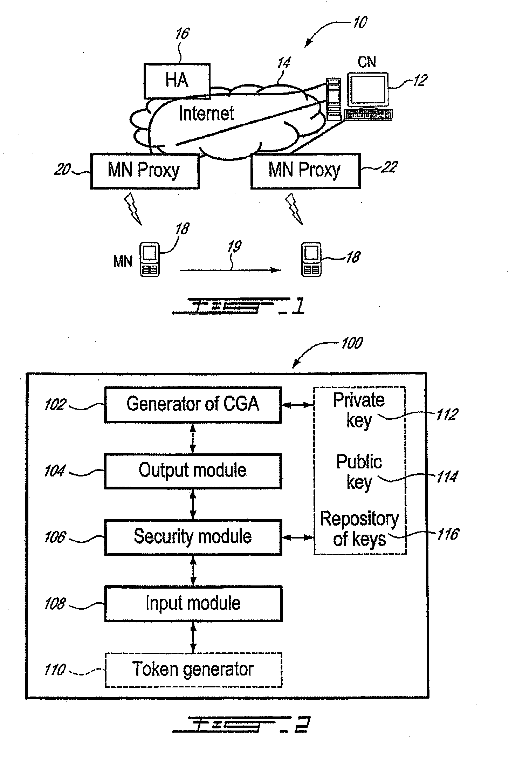

Now turning to Figure 1, a framework, including a MIP network 10, for the embodiments of the present invention, will be first described.

The MIP network 10 includes, for example, a correspondent node (CN) 12, connected to Internet 14 and a HA 16, in which a MN 18 is initially registered. The HA 16 can be a network node, which provides for mobility services of the MN 18, for example by assigning to the latter a home address (HoA).

The MIP network 10 also comprises at least one MN proxy and other components which are well-known in the art. More specifically, two MN proxies 20 and 22 are illustrated in Figure 1 as an example.

The MN 18, which is first attached to the MN proxy 20, can move around within the MIP network 10, as shown by the arrow 19 so as to attach itself to the MN proxy 22. In order to reduce signaling and tunneling overhead over the radio interface between the MN 18 and the network, the MN proxy 20 or 22, which can generally be part of an access router (not shown), performs the signaling on behalf of the MN 18. By using a MN proxy, signaling can be controlled and concentrated in the network.

Figure 2 illustrates a schematic view of a network node 100, such as the HA 16, located on the communication path between a first node and a second node; the first node can be the MN 18 or the MN proxy 20 and the second node can be the CN 12.

The network node 100 comprises a generator of CGA 102, an output module 104, a security module 106, an input module 108, a token generator 110 and a pair of asymmetrical keys including a private key 112 and a public key 114. It should be noted that the pair of asymmetrical keys may reside in a repository 116 of the network node 100, which may include other keys (private or public), for example. Of course, the network node 100 also comprises a plurality of other components (not shown), such as a processor or memory, for performing its usual tasks and procedures, which are well known in the art and thus will not be described further.

The generator of CGA 102 allows for generating a CGA for another node such as generating a HoA using CGA for the MN 18 or the MN proxy 20, using the private key 112. It is believed that CGA generation and proof of ownership using a pair of asymmetrical keys are already known in the art, thus CGA generation (using the private key) and proof of ownership of the CGA (using the public key) will not be further described. However, in order to distinguish the potentially many CGAs generated by the network node 100 from each other, the CGA calculation performed in the generator 102 takes into account a unique information of the node for which the generated CGA is. In the case of the MN 18, the unique information can be for example the MN identifier or ID, which is unique to each specific MN. Also, by using the unique information of each MN 18 in the CGA calculation, it is possible to obtain different hash values for the host ID part of the CGA, for example, so that each such generated CGA can be distinguished from each other. It should be noted that the calculation of the CGA is well documented in RFC3972, which also indicates that the CGA generation method allows to have optional extension fields. In our case, the MN identifier or ID is used as an extension field in the CGA generation.

Once the CGA is generated by the generator 102, using the unique information of the first node and the private key 112 of the network node 100, the output module 104 allows for assigning the CGA to the first node. To do so, the output module 104 sends the CGA to the first node in a secured manner (i.e. through an IKEv2 exchange).,The secured process such as the IKEv2 exchange provides a secure link between the network node 100 and the first node. In the context of routing optimization between the MN 18 and the CN 12, the generated CGA comprises a HoA and the first node can be either the MN 18 or the MN proxy 20. Then, still in the route optimization context, an option can be included in the IKEv2 exchange to indicate that the HoA provided to the MN 18 is a CGA.

The input module 108 allows for intercepting or receiving a message from the first node (e.g., the MN 18 or Proxy MN 20) issued using the CGA and addressed to the second node (e.g., the CN 12).

Upon receipt of the message, the security module 106 of the network node 100 allows for signing the received message, using the private key 112, on behalf of the first node, since the network node 100 generated the CGA for the first node, for the purpose of maintaining CGA validation or providing CGA support. Or in other terms, the network node 100 signs on behalf of the first node for the purpose of enabling the receiver (second node) to obtain proof of ownership of the CGA. This can be also referred to as proxy signing by the network node 100, i.e. signing a message received from another node and issued using the CGA generated for that node. For that purpose, it should be noted that the network node 100 should be located on the communication path between the first node and the second node. In the context of the MIP network 10 of Figure 1, the network node can be the HA 12. In that case, the first node can be the MN 18 or the MN proxy 20. However, in other cases, the network node can be also the MN proxy 20, then, the MN 18 will be the first node.

The input module 108 also allows for receiving messages from the second node. These messages may comprise a token for example.

Upon receipt of the token from the second node, the token generator 110 allows for generating a second token based on the received token. The two tokens are then sent to the first node (e.g., the MN 18 or MN Proxy 20) through the output module 104.

It should be noted that the pair of keys, comprising the private key 112 and public key 114, are well-known to people skilled in the art of CGA, thus they will not be described further.

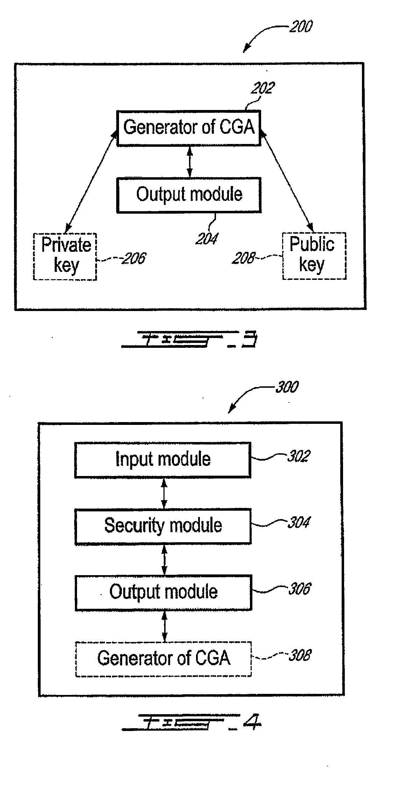

Now turning to Figure 3, a second embodiment of a network node 200 will be described.

The network node 200 comprises a generator of CGA 202, an output module 204 and a pair of asymmetrical keys (i.e., a private key 206 and a public key 208). Of course, the network node 200 also comprises a plurality of other components (not shown), such as a processor or memory, for performing its usual tasks and procedures, which are well known in the art and thus will not be described further.

The generator of CGA 202 has some of the characteristics of the generator of CGA 102 of Figure 2. It allows for generating a CGA for a first node, such as the MN 18, using unique information of the first node and the private key 206.

The output module 204 has some of the characteristics of the output module 104 of Figure 2. It allows for assigning the generated CGA to the first node, in a secure way, e.g., using IKEv2 for example. Of course, other ways and technologies can be used for assigning the CGA to the first node.

In Figure 4, a third embodiment of a network node 300 is illustrated. The network node 300 comprises an input module 302, a security module 304, an output module 306 and a generator of CGA 308.

The input module 302 has some of the characteristics of the input module 108 of Figure 2. It allows for receiving a message from the first node, the message being issued using a CGA, which has been generated beforehand by the generator of CGA 308, using a private key (not shown).

Upon receipt of this message, the security module 304 signs the message on behalf of CGA generation, because the network node 300 has generated the CGA used to issue the message. Indeed, even though the message is from the first node, the network node 300 can sign it through the security module 304 and its private key 112 so that when the second node receives the signed message, it can detect that the network node 300 is indeed the owner of the CGA, generated by the generator of CGA 308 for the first node. The security module 304 has some of the characteristics of the security module 106 of Figure 2.

The output module 306 allows for sending out the signed message to the second node.

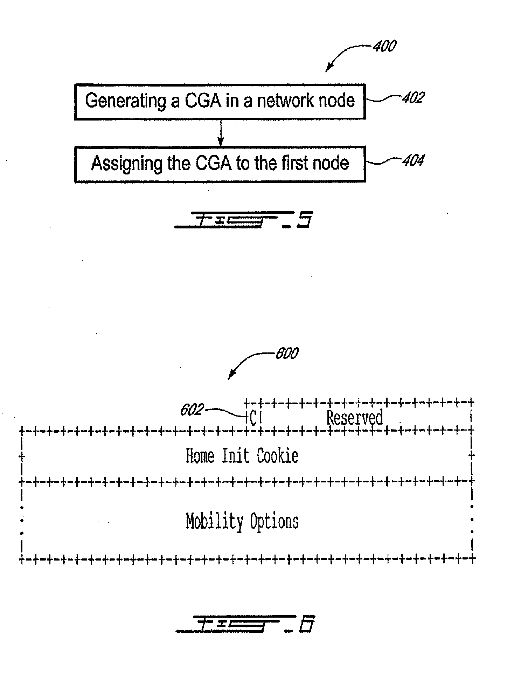

Now turning to Figure 5, a method 400 for generating a CGA will be described.

Method 400 starts with step 402 by generating a CGA for a first node in a network node, such as the network node 100 of Figure 2, the network node 100 being located on the communication path between the first node and a second node. More specifically, the generator 102 of Figure 2 generates the CGA for the first node using unique information of the first node and the private key such as 112 of Figure 2.

Then, in step 404, the generated CGA is assigned to the first node through the output module 104 of Figure 2, for example. More specifically, the CGA is assigned to the first node by using, e.g., IKEv2 for security purposes. Of course, other secure technologies can be also used.

Once the first node receives the CGA, it can issue a message using the received CGA and addressed to the second node. This message is then sent back to the network node 100, for example. The network node 100 receives the message through its input module 108. Upon receipt of this message, the security module 106 signs the received message on behalf of the first node for the CGA generation with the private key 112.

Next, the output module 104 of the network node 100 sends the signed message to the second node, which is able, at will, to establish proof of ownership of the CGA. The second node is expected to have a copy of the public key 114 of the network node 100 of Figure 2.

Once the proof of ownership has been established to the satisfaction of the second node (e.g., with or without actual CGA parameters recalculation), the second node sends a message to the network node 100, the message comprising a first token.

Upon receipt of the first token, the token generator 110 of the network node 100 generates a second token, based on the first token.

The first and second tokens are then sent to the first node, through the output module 104 of the network node 100.

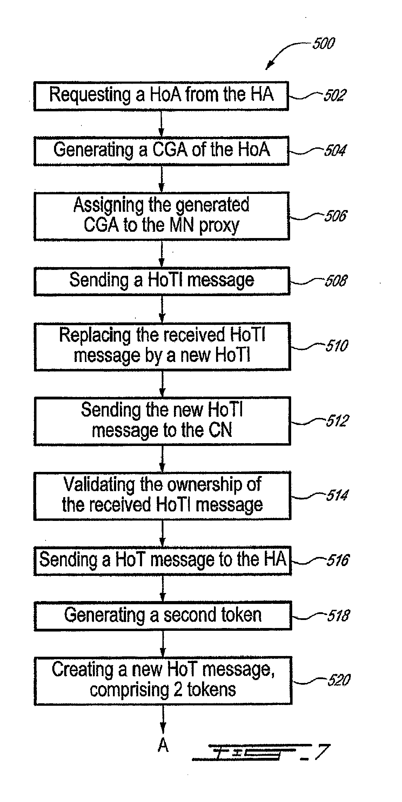

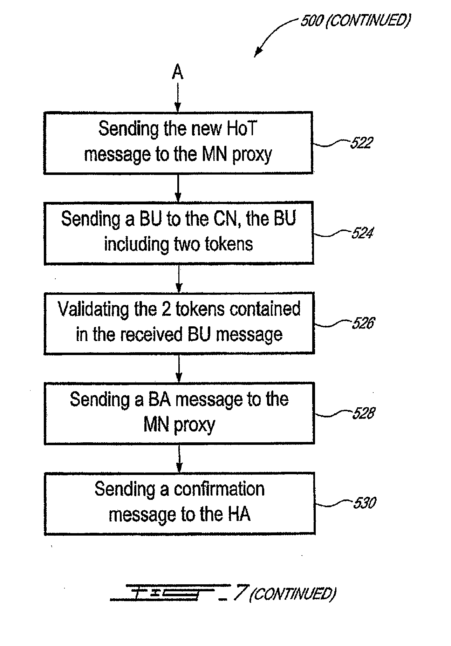

Now, turning to Figure 7 and with reference to Figure 1, an application of the embodiments of the present invention in a method 500 of route optimization in the MIP network 10 will be described. In this method, it is supposed that the network node 100 is the HA 16 of Figure 1, the first node is the MN proxy 20 and the second node is the CN 12 and the method of route optimization allows the MN 18 to directly communicate with the CN 12, for example. As mentioned hereinabove, the MN proxy controls at least a portion of the signaling on behalf of the MN 18. Also, the HA 16 has a pair of asymmetrical keys, comprising a private key and a public key. The public key is shared with at least the second node, i.e. the CN 12. Also, the HA 16 has a piece of unique information representing the MN 18.

First, in step 502, upon certain triggers, such as when the MN 18 attaches to the network 10, the MN proxy 20, on the behalf of the MN 18, requests a HoA from the HA 16 to which the MN 18 is attached.

In step 504, the HA 16 generates a CGA of the requested HoA using its private key and the unique information of the MN 18, such as its identifier. This unique information is taken into account during the CGA calculation so as to obtain a different hash value for the host ID part of the CGA of the HoA.

In step 506, the generated HoA is then assigned to the MN 18, through IKEv2 exchange, as stated in RFC4877, for example. In this case, the HA 16 may also include an option in the IKEv2 exchange in order to indicate that the HoA provided is a CGA.

Once the MN proxy 20 obtains the generated HoA, a home reachability test can be performed for an initial RO process.

More specifically, in step 508, the MN proxy 20 sends a HoTI message with the CN 12 as destination address, the HoTI message being issued using the CGA and being encapsulated in a tunnel which has the HA 16 as destination address.

Upon receipt of the HoTI message from the MN Proxy 20, the HA 16 replaces the received HoTI message with a new HoTI message in step 510. The new HoTI message comprises the HoA as the source address and the CN 12 as the destination address. The HA 16 also includes all the parameters required for the CGA generation or proof of ownership. The HA 16 signs the new HoTI message with its private key, such as the private key 112.

For example, Figure 6 illustrates a portion of a header 600 that could be used with the new HoTI message created by the HA 16. In the exemplary new HoTI message, it should be noted that a new C bit 602 is set to one (1) to indicate that the message was created by the HA 16 and that CGA was used. As one skilled in the art would readily recognize, other bits could be used in the header 600 or elsewhere in the message to achieve the same indicative purpose. Furthermore, for security reasons, if the HA 16 receives a HoTI message with the C bit 602 already set, it should reject this message. Of course, the header 600 comprises other fields for different options.

In step 512 the signed HoTI message is sent to the CN 12. Upon receipt of the signed HoTI message, the CN 12 is able to validate or establish the ownership of the CGA, using the received parameters and the public key, in step 514.

Thereafter, the CN 12 sends back a HoT message to the HA 16 in step 516. The HoT message comprises, in addition to the fields defined in RFC3775, such as the Home Init Cookie, a first token, such as an encrypted permanent Home keygen token, given by the CN 12. This Home token can be generated as stated in RFC3775 and encrypted using the public key of the HA 16, for example.

In step 518, upon receiving the HoT message from the CN 12, the HA 16 generates a second token. The second token is generated based on the first token. More specifically, the second token is generated by hashing the concatenation of the Home token and the CoA of the MN 18. For example, the second token, also referred to as the HA_CoA token, can be given by:
HA_CoA token = SHA1(HA private key, (Home Token|CoA))
where SHA1 is a well-known hashing function.

In step 520, the HA 16 creates a new HoT message, which includes the first and second tokens as well as the public key of the HA 16. The new HoT message can optionally be protected using IPsec security association for example. Of course, other security protocols or mechanisms are also possible.

In step 522, the HA 16 sends the new HoT message to the MN Proxy 20. Upon receipt of the HoT message, in step 524, the MN proxy 20 sends a BU message to the CN 12, the BU message including the same fields as in RFC3775, the HA public key, the Home token and the HA_CoA token. Furthermore, for increased security, the BU message can be protected with an authenticator, which is calculated using the Home token as the key for the hashing, for example.

Upon receiving the BU, in step 526, the CN 12 validates the two received tokens by recomputing the Home token and the HA_CoA token, which is formed by concatenating the Home token and the CoA of the MN 18. When the validation is positive, the CN 12 can then switch data packets towards the CoA since the CN 12 knows that the HA_CoA token has been computed by the HA 16 before being sent to the MN 18 at the CoA. Therefore, the MN 18 is reachable by the HoA and by the CoA.

In step 528, the CN 12 sends a BA message to the MN proxy 20.

After the RO is complete, in step 530, the MN Proxy 20 has the option to send a message to the HA 16 to confirm that a RO session is ongoing. In this case, the HA 16 will be capable of keeping in its Binding Cache Entry (BCE, P29260US1 18 not shown), a list of CNs using RO with the MN 18 and its associated Home token and HA_CoA token.

It should be noted that after a handover of the MN Proxy 20 (or MN 18), the MN proxy 20 can reuse the same BU as defined in step 524 to refresh the binding at the CN 12. More specifically, after the handover, the new MN proxy sends a BU to the HA 16. The HA 16 computes a new HA_CoA token with the new CoA. In the BA, the HA 16 sends the list of CNs using RO with the MN 18 and its associated Home token and HA_CoA token.

The MN Proxy 20 then sends a BU to the CN 12. The BU is constructed as in the step 522 of method 500.

When receiving the BU, the CN 12 can then switch directly the data packets toward the new CoA and sends a BA to the MN Proxy 20.

Some of the advantages of the above method include the fact that MN's involvement in the RO process is reduced. The number of messages exchanged after a handover is also kept low since the subsequent RO session can be established with only one BU/BA exchange between the CN 12 and the MN 18. Also, the need for the Return Routability after handover is reduced if not completely eliminated.

Although the present invention has been described in the foregoing specification by means of a non-restrictive illustrative embodiment, this illustrative embodiment can be modified at will within the scope of the subject invention, which is defined by the appended claims.

## Claims

1. A network node (100) located on a communication path between a first node and a second node, the network node having unique information of the first node and having a private key and a public key, the public key being shared at least with the second node, the network node comprising:
- a generator (102) for generating a Cryptographically Generated Address CGAs for the first node using the unique information of the first node;
- an output module (104) for assigning the CGA to the first node;
- an input module (108) for receiving a message from the first node, the message being issued using a CGA and addressed to the second node; and
- a security module (106) for signing the received message using the private key of the network node on behalf of the first node,
wherein the output module is arranged to send the signed message to the second node, thereby enabling proof of ownership of the CGA by the second node

2. A network node as defined in claim 1, wherein the private key and the public key form a pair of asymmetrical keys.

3. A network node as defined in claim 2, wherein the generator is arranged to use the private key to generate the CGA for the first node.

4. A network node as defined in claim 1, wherein the output module is arranged to assign the CGA to the first node.

5. A network node as defined in claim 1, wherein the input module is arranged to receive a message from the first node comprising a HoTI message.

6. A network node as defined in claim 2, wherein the security module is arranged to use the private key to sign the received message on behalf of the first node.

7. A network node as defined in claim 1, wherein the input module is arranged to receive, after the signed message has been sent, a message from the second node comprising a first token.

8. A network node as defined in claim 7, further comprising a token generator for generating a second token, the second token being generated based on the first token.

9. A network node as defined in claim 8, wherein the output module is arranged to send a further message including the first and second tokens to the first node.

10. A method for generating a cryptographically generated address CGA, comprising steps of:
- generating (504), in a network node located on a communication path between a first node and a second node, a cryptographically generated address CGA for the first node, wherein the network node has unique information of the first node and has a private key and a public key, the public key being shared at least with the second node, the CGA being generated using the unique information of the first node;
- assigning (506) the CGA to the first node;
- receiving a message from the first node, the message being issued using a CGA and addressed to the second node;
- signing the received message, on behalf of the first node, with the private key; and
- sending the signed message to the second node, thereby enabling proof of ownership of the CGA by the second node.

11. A method as defined in claim 10, further comprising a step of using a private key of the network node to generate the CGA for the first node.

12. A method as defined in claim 10, wherein the step of assigning the CGA to the first node comprises a step of sending the generated CGA to the first node in a secure manner.

13. A method as defined in claim 10, further comprising, following the step of sending the signed message, a step of receiving a further message from the second node, the further received message comprising a first token.

14. A method as defined in claim 13, further comprising a step of generating a second token after the step of receiving the further message from the second node, the second token being based on the first token.

15. A method as defined in claim 14, further comprising a following step of sending the first and second tokens to the first node.

## Patentansprüche

1. Netzwerkknoten (100), der auf einem Kommunikationsweg zwischen einem ersten Knoten und einem zweiten Knoten angeordnet ist, wobei der Netzwerkknoten eindeutige Informationen des ersten Knotens hat und einen privaten Schlüssel sowie einen öffentlichen Schlüssel aufweist, wobei der öffentliche Schlüssel mindestens mit dem zweiten Knoten geteilt wird, wobei der Netzwerkknoten umfasst:
- einen Generator (102) zum Erzeugen einer kryptografisch generierten Adresse CGA für den ersten Knoten unter Verwendung der eindeutigen Informationen des ersten Knotens;
- ein Ausgabemodul (104) zum Zuweisen der CGA für den ersten Knoten;
- ein Eingabemodul (108) zum Empfangen einer Nachricht vom ersten Knoten, wobei die Nachricht unter Verwendung einer CGA ausgegeben und an den zweiten Knoten adressiert wird; und
- ein Sicherheitsmodul (106) zum Signieren der empfangenen Nachricht namens des ersten Knotens, wobei der private Schlüssel des Netzwerkknotens verwendet wird,
wobei das Ausgabemodul eingerichtet ist, die signierte Nachricht an den zweiten Knoten zu senden, wodurch ermöglicht wird zu beweisen, dass der zweite Knoten Eigentümer der CGA ist.

2. Netzwerkknoten nach Anspruch 1, wobei der private Schlüssel und der öffentliche Schlüssel ein Paar von asymmetrischen Schlüsseln bilden.

3. Netzwerkknoten nach Anspruch 2, wobei der Generator eingerichtet ist, den privaten Schlüssel zu verwenden, um die CGA für den ersten Knoten zu erzeugen.

4. Netzwerkknoten nach Anspruch 1, wobei das Ausgabemodul eingerichtet ist, die CGA dem ersten Knoten zuzuweisen.

5. Netzwerkknoten nach Anspruch 1, wobei das Eingabemodul eingerichtet ist, eine Nachricht vom ersten Knoten zu empfangen, die eine HoTI-Nachricht enthält.

6. Netzwerkknoten nach Anspruch 2, wobei das Sicherheitsmodul eingerichtet ist, den privaten Schlüssel zu verwenden, um die empfangene Nachricht namens des ersten Knotens zu signieren.

7. Netzwerkknoten nach Anspruch 1, wobei das Eingabemodul eingerichtet ist, nach dem Absenden der signierten Nachricht eine Nachricht vom zweiten Knoten zu empfangen, die einen ersten Token enthält.

8. Netzwerkknoten nach Anspruch 7, ferner mit einem Token-Generator zum Erzeugen eines zweiten Token, wobei der zweite Token auf Basis des ersten Token erzeugt wird.

9. Netzwerkknoten nach Anspruch 8, wobei das Ausgabemodul eingerichtet ist, eine weitere Nachricht an den ersten Knoten zu senden, die den ersten und zweiten Token enthält.

10. Verfahren zum Erzeugen einer kryptografisch generierten Adresse CGA, die Schritte umfassend, dass:
- in einem Netzwerkknoten, der auf einem Kommunikationsweg zwischen einem ersten Knoten und einem zweiten Knoten angeordnet ist, eine kryptografisch generierte Adresse CGA für den ersten Knoten erzeugt wird (504), wobei der Netzwerkknoten eindeutige Informationen des ersten Knotens hat und einen privaten Schlüssel sowie einen öffentlichen Schlüssel aufweist, wobei der öffentliche Schlüssel mindestens mit dem zweiten Knoten geteilt wird, wobei die CGA unter Verwendung der eindeutigen Informationen des ersten Knotens erzeugt wird;
- die CGA dem ersten Knoten zugewiesen wird (506);
- eine Nachricht vom ersten Knoten empfangen wird, wobei die Nachricht unter Verwendung einer CGA ausgegeben und an den zweiten Knoten adressiert wird; und
- die empfangene Nachricht namens des ersten Knotens mit dem privaten Schlüssel signiert wird; und
- die signierte Nachricht an den zweiten Knoten gesendet wird, wodurch ermöglicht wird zu beweisen, dass der zweite Knoten Eigentümer der CGA ist.

11. Verfahren nach Anspruch 10, ferner einen Schritt zum Verwenden eines privaten Schlüssels des Netzwerkknotens zur Erzeugung der CGA für den ersten Knoten umfassend.

12. Verfahren nach Anspruch 10, wobei der Schritt zum Zuweisen der CGA für den ersten Knoten einen Schritt umfasst, die erzeugte CGA auf eine sichere Weise an den ersten Knoten zu senden.

13. Verfahren nach Anspruch 10, ferner im Anschluss an den Schritt zum Senden der signierten Nachricht einen Schritt umfassend, in dem eine weitere Nachricht vom zweiten Knoten empfangen wird, wobei die weitere empfangene Nachricht einen ersten Token enthält.

14. Verfahren nach Anspruch 13, ferner nach dem Schritt zum Empfangen der weiteren Nachricht vom zweiten Knoten einen Schritt zum Erzeugen eines zweiten Token umfassend, wobei der zweite Token auf dem ersten Token basiert.

15. Verfahren nach Anspruch 14, ferner einen nachfolgenden Schritt zum Senden des ersten und zweiten Tokens an den ersten Knoten umfassend.

## Revendications

1. Noeud de réseau (100) situé sur un trajet de communication entre un premier noeud et un second noeud, le noeud de réseau ayant une information unique du premier noeud et ayant une clé privée et une clé publique, la clé publique étant partagé avec au moins le second noeud, le noeud de réseau comprenant :
- un générateur (102) pour générer une adresse générée cryptographiquement CGA pour le premier noeud en utilisant l'information unique du premier noeud ;
- un module de sortie (104) pour assigner le CGA compromis noeud ;
- un module d'entrée (108) pour recevoir un message provenant du premier noeud, le message étant émis en utilisant un CGA et adressé au second noeud,
- un module de sécurité (105) pour signer le message reçu en utilisant la clé privée du noeud de réseau pour le compte du premier noeud,
dans lequel le module de sortie est agencé pour envoyer le message signé aux second noeud, en permettant ainsi une preuve de propriété du CGA par le second noeud.

2. Noeud de réseau selon la revendication 1, dans lequel la clé privée et la clé publique forment une paire de clés asymétriques.

3. Noeud de réseau selon la revendication 2, dans lequel le générateur est agencé pour utiliser la clé privée pour générer le CGA pour le premier noeud.

4. Noeud de réseau selon la revendication 1, dans lequel le module de sortie est agencé pour assigner le CGA au premier noeud.

5. Noeud de réseau selon la revendication 1, dans lequel le module d'entrée est agencé pour recevoir un message provenant du premier noeud comprenant un message HoTI.

6. Noeud de réseau selon la revendication 2, dans lequel le module de sécurité est agencé pour utiliser la clé privée pour signer le message reçu pour le compte du premier noeud.

7. Noeud de réseau selon la revendication 1, dans lequel le module d'entrée est agencé pour recevoir, après que le message signé a été envoyé, un message provenant du second noeud comprenant un premier jeton.

8. Noeud de réseau selon la revendication 7, comprenant en outre un générateur de jeton pour générer un second jeton, le second jeton étant généré sur la base du premier jeton.

9. Noeud de réseau selon la revendication 8, dans lequel le module de sortie est agencé pour envoyer un message supplémentaire incluant le premier et le second jeton vers le premier noeud.

10. Procédé de génération d'une adresse générée cryptographiquement CGA, comprenant les étapes consistant à :
- générer (501), dans un noeud de réseau situé sur un trajet de communication entre un premier noeud et un second noeud, une adresse générée cryptographiquement CGA pour le premier noeud, dans lequel le noeud de réseau a une information unique du premier noeud et possède une clé privée et une clé publique, la clé publique étant partagé au moins avec le second noeud, le CGA étant généré en utilisant l'information unique du premier noeud ;
- assigner (506) le CGA au premier noeud ;
- recevoir un message provenant du premier noeud, le message étant émis en utilisant un CGA et adressé au second noeud ;
- signer le message reçu, pour le compte du premier noeud, avec la clé privée ; et
- envoyer le message signé vers le second noeud, en permettant ainsi une preuve de propriété du CGA par le second noeud.

11. Procédé selon la revendication 10, comprenant en outre une étape d'utilisation d'une clé privée du noeud de réseau pour générer une CGA pour le premier noeud.

12. Procédé selon la revendication 10, dans lequel l'étape d'assignation du CGA au premier noeud comprend une étape d'envoi du CGA généré au premier noeud de manière sécurisée.

13. Procédé selon la revendication 10, comprenant en outre, suivant l'étape d'envoi du message signé, une étape de réception d'un message supplémentaire provenant du second noeud, le message supplémentaire reçu comprenant un premier jeton.

14. Procédé selon la revendication 13, comprenant en outre un état de génération d'un second jeton après l'étape de réception du message supplémentaire provenant du second noeud, le second jeton étant basé sur le premier jeton.

15. Procédé selon la revendication 14, comprenant en outre une étape suivante d'envoi du premier et du second jeton au premier noeud.
